# EUROPEAN PATENT SPECIFICATION

(11) **EP 1 091 521 B1**
(45) Date of publication and mention of the grant of the patent: **10.09.2003**
(21) Application number: 00112725.7
(22) Date of filing: 15.06.2000
(51) Int. Cl.: H04L 12/18

(54) **Digital contents distribution system**
System zum Verteilen von digitalen Inhalten
Système pour la distribution de données numeriques

(30) Priority: 07.10.1999 JP 28701899
(43) Date of publication of application: 11.04.2001
(73) Proprietor: Hitachi, Ltd., Chiyoda-ku, Tokyo 101-8010 (JP)
(72) Inventor: Suzuki, Yuka, c/o Hitachi Ltd, Intell. Prop. Group, Chiyoda-ku, Tokyo 100-8220 (JP); Kojima, Takeshi, c/o Hitachi Ltd,Intel.Prop. Group, Chiyoda-ku, Tokyo 100-8220 (JP)
(74) Representative: Strehl Schübel-Hopf & Partner

(56) References cited:
- EP-A- 0 561 649
- EP-A- 0 786 723
- PATENT ABSTRACTS OF JAPAN vol. 1999, no. 11, 30 September 1999 (1999-09-30) & JP 11 168464 A (KOBE STEEL LTD), 22 June 1999 (1999-06-22)
- PATENT ABSTRACTS OF JAPAN vol. 1997, no. 08, 29 August 1997 (1997-08-29) & JP 09 097261 A (TOSHIBA CORP), 8 April 1997 (1997-04-08)
- DATABASE INSPEC [Online] INSTITUTE OF ELECTRICAL ENGINEERS, STEVENAGE, GB; LEI H ET AL: "DataX: an approach to ubiquitous database access" Database accession no. 6182613 XP002170465 -& PROCEEDINGS WMCSA'99. SECOND IEEE WORKSHOP ON MOBILE COMPUTING SYSTEMS AND APPLICATIONS, PROCEEDINGS OF WMCSA99: 2ND IEEE WORKSHOP ON MOBILE COMPUTING SYSTEMS AND APPLICATIONS, NEW ORLEANS, LA, USA, 25-26 FEB. 1999, pages 70-79, XP002170535 1999, Los Alamitos, CA, USA, IEEE Comput. Soc, USA ISBN: 0-7695-0025-0

## Description

### BACKGROUND OF THE INVENTION

The present invention relates to a digital contents distribution system for distributing digital contents, and more particularly to a digital contents distribution system for distributing digital contents from a central controller to a plurality of terminals distributed at stores or the like and allowing users to quickly acquire desired digital contents via the terminals.

Data of a digital type to be circulated or distributed is hereinafter called digital contents. For example, music data, video (moving image) data, still image data, text data, game programs, database data, application software and the like are all digital contents if they are of a digital type. Even if original data is of an analog type, digitalized analog data is considered as digital contents. For example, if a music performance recorded in an analog type is distributed as a hard disk medium of a digital type, this data is considered as digital contents.

A digital contents distribution system for distributing such digital contents from a central controller to a plurality of terminals via various communications lines is not under practical use. For example, the digital contents distribution system described in JP-A-9-204378 connects a central controller and each terminal by a communication path using a communications satellite, or by a ground-based digital network constituted of digital lines installed on the ground. The central controller stores a large number of digital contents titles, each terminal stores digital contents distributed from the central controller, and the store having such a terminal stores desired contents in one of various storage media supplied by a user to sell the digital contents to the user.

With this digital contents distribution system, however, even if a user comes to the store, it may occur that the digital contents desired by the user are not stored in the terminal of the store. In this case, it is necessary for the terminal to request the central controller to search the desired digital contents and distribute the searched digital contents to the terminal. It may take a long time to search and distribute digital contents and the user is required to wait for a long time. During this period, the terminal is occupied by the single user so that a wait time of other users prolongs.

JP-A-11-168464 shows a general digital information distribution system, wherein a digital information distribution means is connected to a digital information managing means via a network. As the distributing means has a storage of limited capacity, it should delete unnecessary digital information while adding new digital information. Such information replacement is performed based on the sales result in the device. In contrast thereto, the present invention provides a system in which the user can reserve and obtain the digital contents at the designated store.

### SUMMARY OF THE INVENTION

It is an object of the present invention to solve the above-described problems and provide a digital contents distribution system capable of shortening a wait time for acquiring digital contents and providing each store with many sales chances.

In order to achieve the above object, the invention provides the digital contents distribution system of present claims 1 and 5, and the corresponding methods and programs of claims 6 to 9. Preferred embodiments are given in the subclaims.

### BRIEF DESCRIPTION OF THE DRAWINGS

Fig. 1 is a diagram showing the structure of a digital contents distribution system according to an embodiment.
Fig. 2 is a diagram showing the data format of a store information storage 13 of the embodiment.
Fig. 3 is a diagram showing the data format of an all contents title storage 12 of the embodiment.
Fig. 4 is a diagram showing the data format of an all contents storage 14 of the embodiment.
Fig. 5 is a diagram showing the data format of a terminal state storage 27 of the embodiment.
Fig. 6 is a diagram showing the data format of a temporary contents title storage 24 of the embodiment.
Fig. 7 is a diagram showing the data format of a regular contents title storage 25 of the embodiment.
Fig. 8 is a diagram showing the data format of a contents storage 28 of the embodiment.
Fig. 9 is a diagram showing the data format of a reservation information storage 26 of the embodiment.
Fig. 10 is a flow chart illustrating the operation to be executed by a user request processor 15 of the embodiment.
Fig. 11 is a flow chart illustrating the operation to be executed by a contents acquisition unit 29 and a contents request processor 16.
Fig. 12 is a flow chart illustrating the operation to be executed by a medium access processor 30 of the embodiment.
Fig. 13 is a flow chart illustrating the detailed operation at Step 85 in Fig. 12.
Fig. 14 is a flow chart illustrating the operation to be executed by the user request processor 15 according to a second embodiment.
Fig. 15 is a flow chart illustrating the operation to be executed by the medium access device 30, user request processor 15 and contents acquisition unit 29 according to the second embodiment.

### DESCRIPTION OF THE EMBODIMENTS

### (1) The First Embodiment

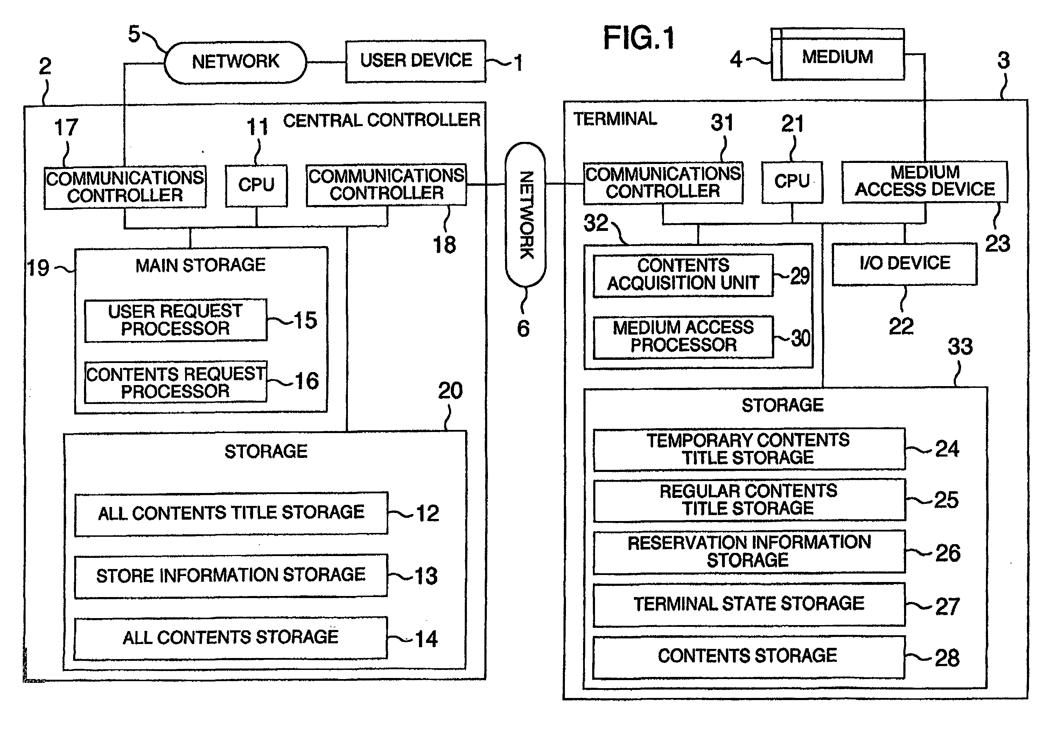

Fig. 1 is a diagram showing the structure of a digital contents distribution system according to the first embodiment. This system is constituted of a user device 1, a central controller 2, a terminal 3, a medium 4, a network 5, and a network 6. The network 5 is a network such as public telephone lines and the Internet for connecting the user device 1 and central controller 2, and the network 6 is a network such as private lines for connecting the central controller 2 and the terminal 3.

Although the network 6 may be public telephone lines or the Internet, a high speed network is preferable in order to transfer a large amount of data. The networks 5 and 6 may be the same network. The data or information transmission is made in accordance with the protocol defined on the network.

The user device 1 is a device which a user uses for reserving digital contents to the central controller 2. This device 1 is a data communications device such as a personal computer, a wired line telephone, and a portable (radio) telephone.

The central controller 2 is an information processing apparatus and has a CPU 11, a first communications controller 17, a second communications controller 18, a main storage 19, and a storage 20. The first communications controller 17 controls communications between the central controller 2 and user device 1 via the network 5. The second communications controller 18 controls communications between the central controller 2 and terminal 3 via the network 6.

The storage 20 has an all contents title storage 12, a store information storage 13 and an all contents storage 14. The all contents title storage 12 stores title information of each of digital contents. The store information storage 13 stores information on a store in which the terminal 3 is installed. The all contents storage 14 stores the data of each of digital contents.

The main storage 19 stores programs for a user request processor 15 and a contents request processor 16, the programs being executed by CPU 11. The user request processor 15 responds to a reservation request from the user device 1, issues a reservation number for the designated digital contents, and notifies the reservation number to the user device 1 and terminal 3. The contents request processor 16 responds to a contents request from the terminal 3, refers to the all contents title storage 12 and all contents storage 14, and downloads the title and data of the reserved digital contents to the terminal 3.

The terminal 3 is an information processing apparatus installed at each store and also a terminal of the central controller 2. The terminal 3 includes a CPU 21, an I/O device 22, a medium access device 23, a communications controller 31, a main storage 32, and a storage 33. The I/O device 22 is a device for showing a guide window to a user and receiving an instruction from the user. The medium access device 23 is a device for writing digital contents on the medium 4. The communications controller 31 controls communications between the terminal 3 and central controller 2 via the network 6.

The storage 33 such as a hard disk has a temporary contents title storage 24, a regular contents title storage 25, a reservation information storage 26, a terminal state storage 27, and a contents storage 28. The temporary contents title storage 24 stores title information of reserved digital contents. The regular contents title storage 25 stores title information of digital contents already stored locally in the store. The reservation information storage 26 stores reservation information notified from the central controller 2. The terminal state storage 27 stores a remaining capacity of the storage 33 and other data. The contents storage 28 stores the data of digital contents.

The main storage 32 stores programs for a contents acquisition unit 29 and a medium access processor 30, the programs being executed by CPU 21. The contents acquisition unit 29 receives a reservation notice from the central controller 2 and registers it in the reservation information storage 26. If reserved digital contents are still not stored at the terminal 3, a contents request is issued to the central controller 2 and the title and data of the acquired digital contents are stored in the temporary contents title storage 24 and contents storage 28. The medium access processor 30 responds to an instruction from a user via the I/O device 22, refers to the reservation information storage 26, temporary contents title storage 24 and contents storage 28, and downloads the data of reserved digital contents or the data of already stored digital contents to the medium 4.

The medium 4 is a memory card, an MD (Mini Disc), a DVD (Digital Video Disc), a CD (Compact Disc), an FD (Floppy Disc) or the like.

Programs for the user request processor 15, contents request processor 16, contents acquisition unit 29 and medium access processor 30 may be stored in a storage medium, and read into the main storage 19 and 32 via drivers connected to the central controller 2 and terminal 3 or transferred via other computers and networks to the central controller 2 and terminal 3 to be executed by CPU 11 and CPU 21. Further, programs for the acquisition unit 29 and medium access processor 30 may be stored in a storage medium, and read into the main storage 32 via a driver connected to the terminal 3 or transferred via another computer and another network to the terminal 3 to be executed by CPU 21.

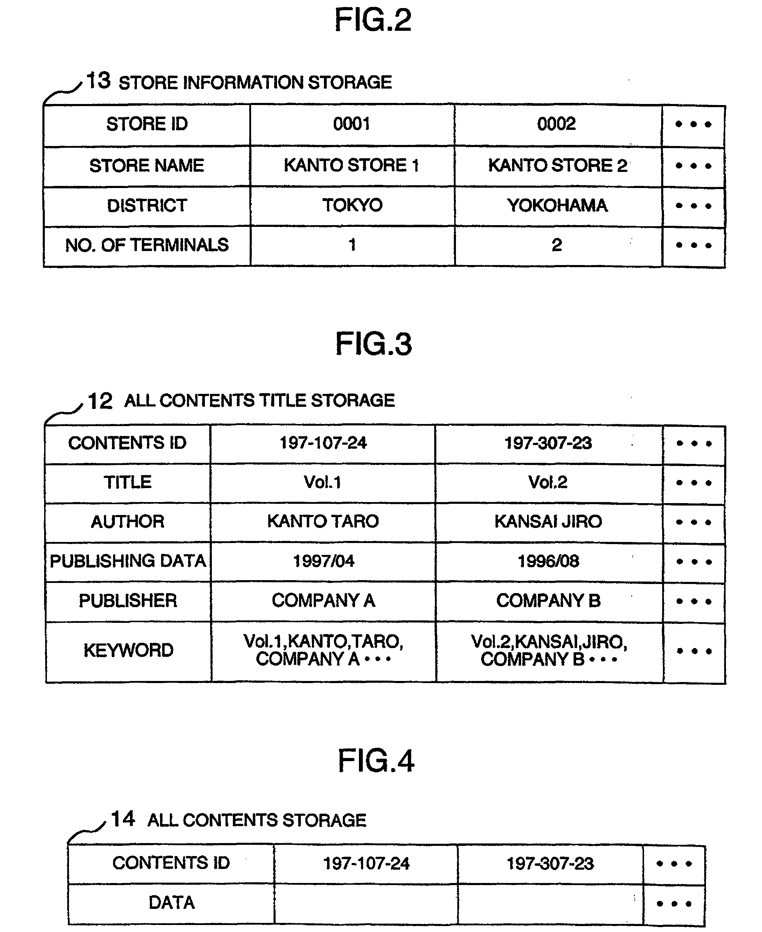

Fig. 2 is a diagram showing the data format of the store information storage 13. The records of the store information storage 13 include data items: a store ID for identifying the store in which the terminal 3 is installed; a store name; a district; and the number of terminals at the store. The district indicates the name of the district where the store locates.

Fig. 3 is a diagram showing the data format of the all contents title storage 12. The records of the all contents title storage 12 correspond to the digital contents stored in the all contents storage 14 and include data items unique in the system: a contents ID unique in the system; a title; an author name; a publication date; a publisher; and a keyword. The "title" is the name of digital contents, the "keyword" is a keyword derived for the digital contents and is used for a keyword search.

Fig. 4 is a diagram showing the data format of the all contents storage 14. The all contents storage 14 is partitioned for each of digital contents and stores a contents ID and data of each of digital contents.

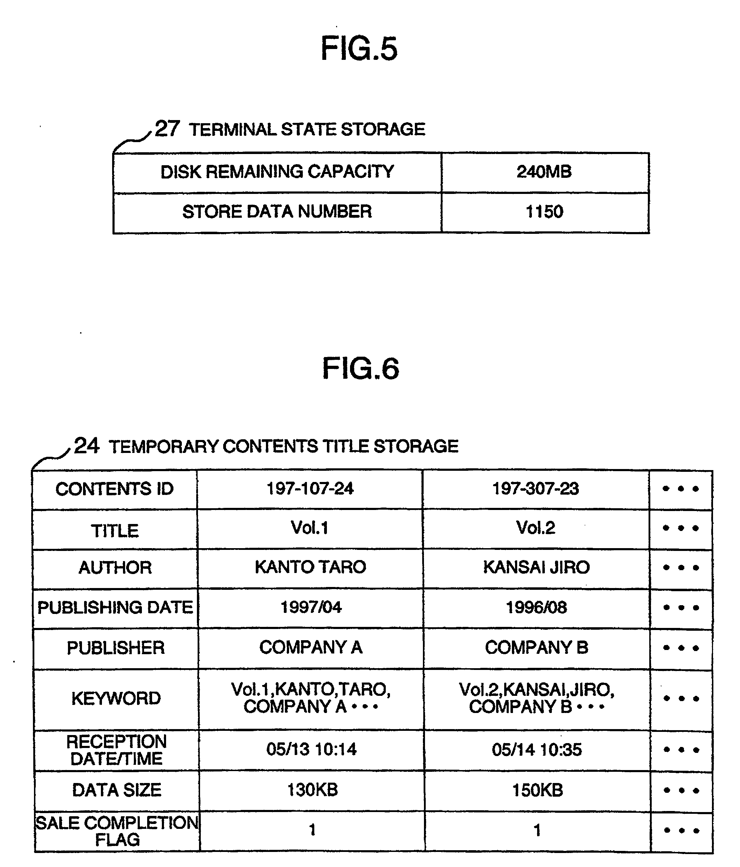

Fig. 5 is a diagram showing the data format of the terminal state storage 27. The terminal state storage 27 stores a disk remaining capacity and a store data number. The "disk remaining capacity" indicates a remaining capacity of a disk storing digital contents, and the "store data number" indicates the number of total digital contents stored at the terminal 3.

Fig. 6 is a diagram showing the data format of the temporary contents title storage 24. The temporary contents title storage 24 stores the title information or the like of digital contents reserved in response to a reservation request from a user. The records of the temporary contents title storage 24 correspond to the digital contents stored in the contents storage 28 and include data items: a contents ID; a title; an author name; a publication date; a publisher; a keyword; a reception date/time; a data size; and a sale completion flag. The "reception date/time" indicates the date and time when the digital contents are received from the central controller 2, the "data size" indicates the side of the digital contents, and the "sale completion flag" is a flag which is set to 1 when the sale of the digital contents to the reserved user is completed.

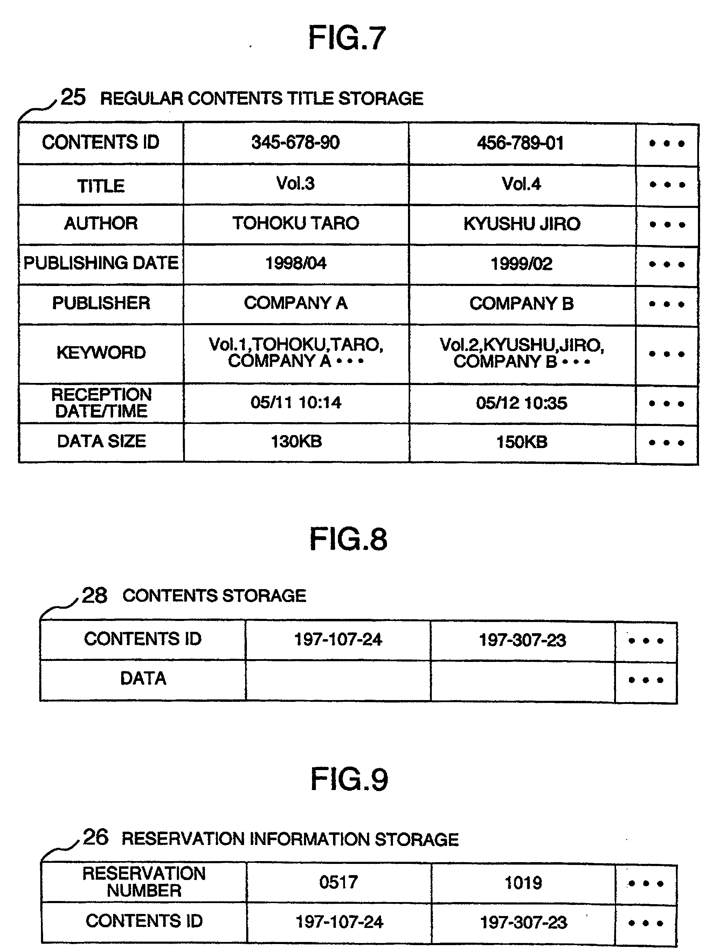

Fig. 7 is a diagram showing the data format of the regular contents title storage 25. The regular contents title storage 25 stores the title information of digital contents or the like locally acquired by a decision of the store independent from reservations. The data format of the regular contents title storage 25 is same as that of the temporary contents title storage 24, excepting the "sale completion flag".

Fig. 8 is a diagram showing the data format of the contents storage 28. The contents storage 28 stores the data of digital contents having the contents IDs stored in the temporary and regular contents title storage 24 and 25. The data format of the contents storage 28 is same as that of the all contents storage 14.

Fig. 9 is a diagram showing the data format of the reservation information storage 26. The records of the reservation information storage 26 store a reservation number and a contents ID. The "reservation number" is a reservation identification number added to reserved digital contents.

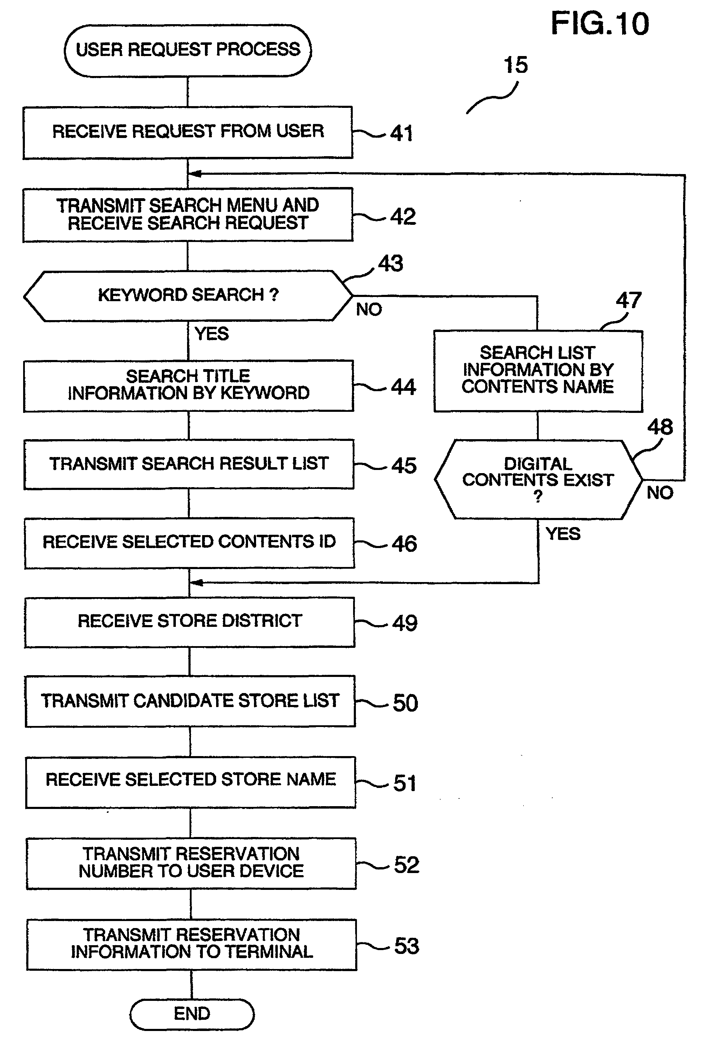

Fig. 10 is a flow chart illustrating the operation to be executed by the user request processor 15 in the central controller 2. Upon reception of a request from the user device 1 (step 41), the user request processor 15 transmits a search menu to the user device 1, and in response to this, receives a search request from the user device 1 (step 42). The search menu includes a selection between a designation of the contents name or a keyword search. The search request includes a contents name or a keyword for the keyword search. If the search request is the keyword search (YES at step 43), the user request processor 15 searches the all contents title storage 12 by using the designated keyword (step 44), transmits a list of search results to the user device 1 (step 45), and receives the selected contents ID (step 46). If the search request is designated by the contents name (NO at step 43), the user request processor 15 searches the all contents title storage 12 by using the designated contents name (step 47). If the corresponding digital contents do not exist (NO at step 48), the flow returns to step 42, whereas if the corresponding digital contents exist (YES at step 48), the contents ID is acquired to thereafter advance to step 49.

Next, the user request processor 15 transmits a store district menu to the user device 1 and receives a selected district (step 49). The user request processor 15 searches the store information storage 13, generates a list of candidate stores in the designated district, and transmits the list to the user device 1 (step 50). Upon reception of a selected store name (step 51), the user request processor 15 issues a reservation number of the user and transmits it to the user device 1 (step 52). The user request processor 15 also transmits the same reservation number and contents ID as the reservation information to the terminal 3 (step 53).

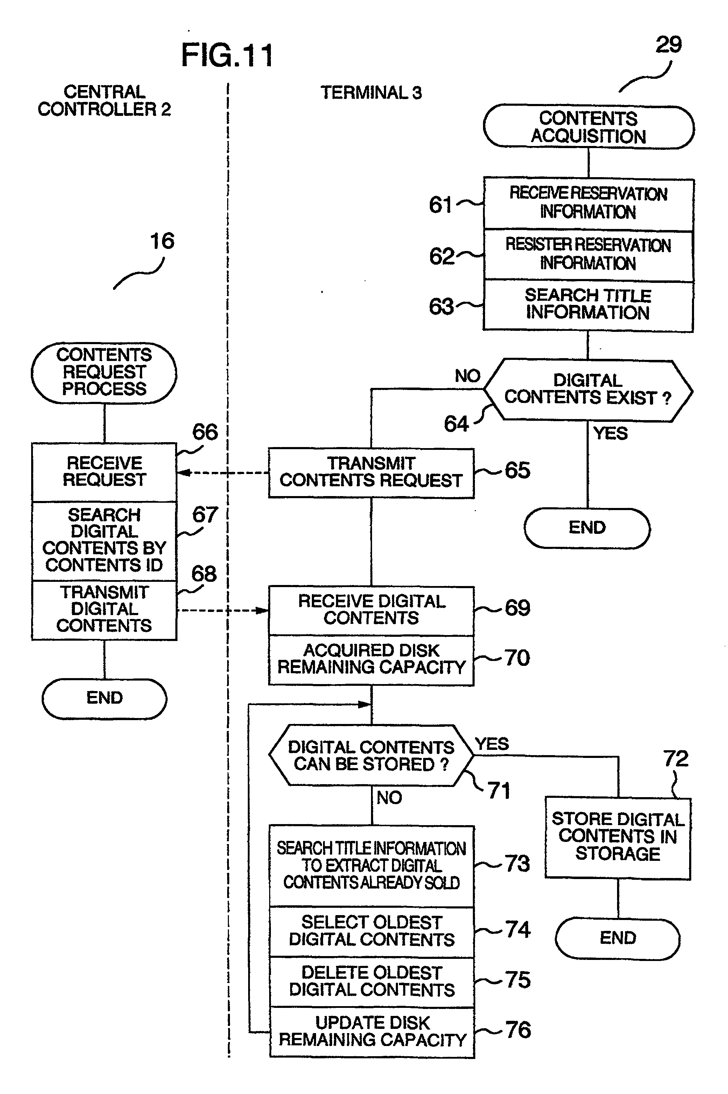

Fig. 11 is a flow chart illustrating the operation to be executed by the contents acquisition unit 29 of the terminal 3 and the contents request processor 16 of the central controller 2. Upon reception of the reservation information from the central controller 2 (step 61), the contents acquisition unit 29 registers the reservation information in the reservation information storage 26 (step 62). The contents acquisition unit 29 searches the temporary and regular contents list storage 24 and 25 (step 63) to judge whether the digital contents having the same contents ID exist (step 64). If exist (YES at step 64), the process is terminated, whereas if the contents do not exist (NO at step 64), the contents acquisition unit 29 requests the digital contents to the central controller 2 by using the contents ID (step 65).

Upon reception of this contents request (step 66), the contents request processor 16 of the central controller 2 searches the all contents title storage 12 and all contents storage 14 by using the received contents ID (step 67) and transmits the acquired title information and data of the digital contents to the terminal 3 (step 68).

Upon reception of the title information and data of the digital contents (step 69), the contents acquisition unit 29 of the terminal 3 acquires the disk remaining capacity from the terminal state storage 27 (step 70). If the disk remaining capacity is sufficient for storing the digital contents (YES at step 71), the contents acquisition unit 29 registers the title information in the temporary contents title storage 24 and stores the data of the digital contents in the contents storage 28 (step 72). In this case, the contents reception date/time, the data size, and the reset sale completion flag are added to the title information and registered in the temporary contents title storage 24. If the digital contents cannot be stored in the disk (NO at step 71), the temporary contents title storage 24 is searched to extract the title information of the digital contents having the set "sale completion flag" (step 73). Of the extracted title information, the digital contents having the oldest "reception date/time" are selected (step 74), and the title information and data of the selected digital contents are deleted from the temporary contents title storage 24 and contents storage 28 (step 75). Next, the "disk remaining capacity" in the terminal state storage 27 is incremented by an amount corresponding to the deleted data (step 76) to thereafter return to the judgement at step 71.

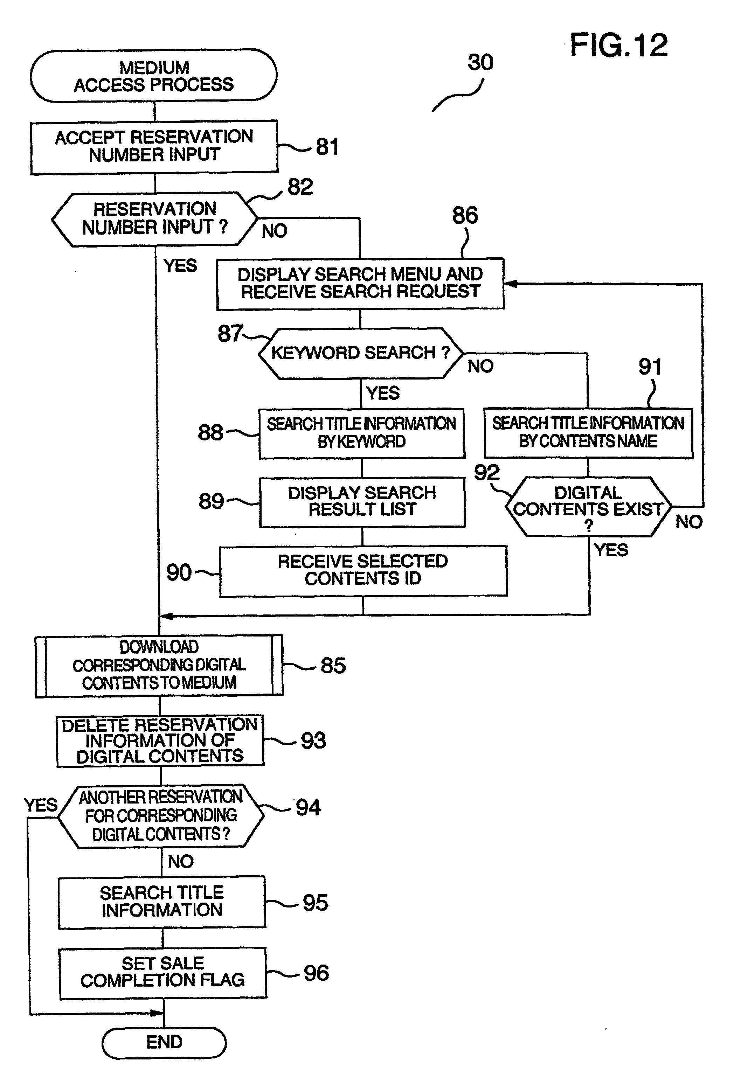

Fig. 12 is a flow chart illustrating the operation to be executed by the medium access processor 30 of the terminal 3. If the reservation has been made, the medium access processor 30 receives the reservation number input by the user through the I/O device 22 (step 81). When the reservation number is input (YES at step 82), the medium access processor refers to the reservation information storage 26, acquires the contents ID by using the reservation number, searches the contents storage 28 by using the contents ID, and downloads the searched digital contents to the medium 4 via the medium access device 23 (step 85).

Next, the reservation number and contents ID are deleted from the reservation information storage 26 (step 93). Next, the reservation information storage 26 is searched, and if there is no reservation information record having the same contents ID (NO at step 94), the temporary contents title storage 24 is searched (step 95) to refer to the title information record having the same contents ID and set the "sale completion flag" of the record (step 96).

If no reservation number is input (NO at step 82), a search menu is displayed on the I/O device to receive a search request (step 86). If the search request is a keyword search (YES at step 87), the temporary and regular contents list storage 24 and 25 are searched by using the designated keyword (step 88), the search result list is displayed on the I/O device (step 89), and the selected contents ID input from the I/D device is received (step 90) to thereafter advance to step 85. If the search request is designated by the contents name (NO at step 87), the temporary contents title storage 24 is searched by using the designated contents name (step 91). If the corresponding digital contents do not exist (NO at step 92), the flow returns to step 86, whereas if the corresponding digital contents exist (YES at step 92), the contents ID is acquired to advance to step 85. As above, even a user having no reservation can buy digital contents if the terminal 3 has the requested digital contents.

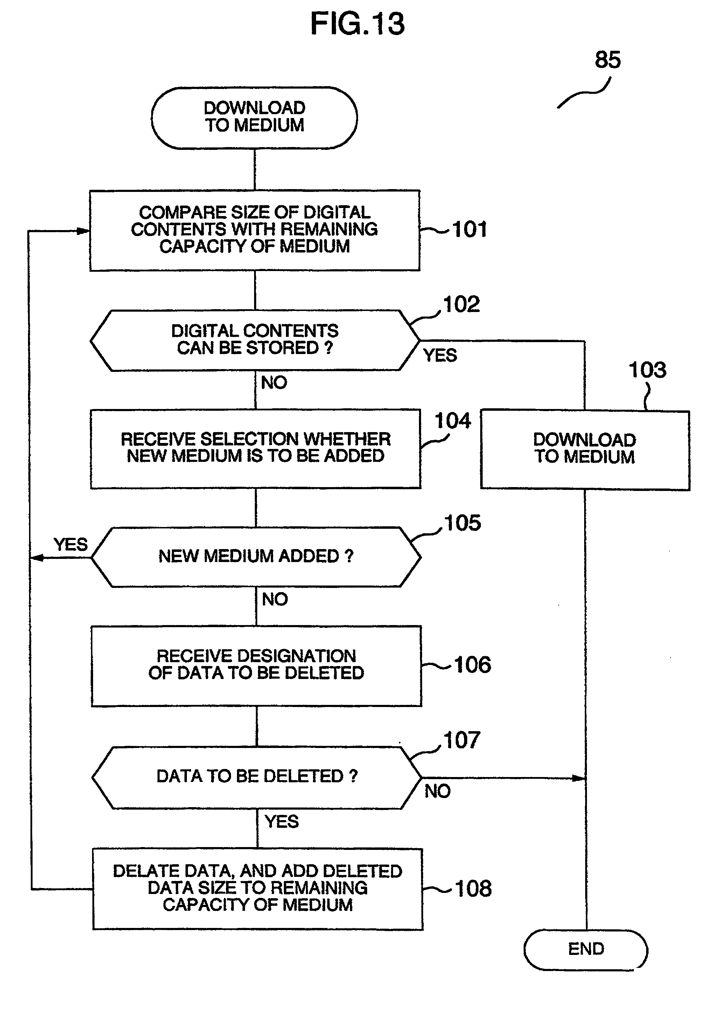

Fig. 13 is a flow chart illustrating the operation to be executed by the medium access processor 30 at step 85. The medium access processor 30 compares the data size of digital contents with the remaining capacity of the medium 4 (step 101). If the remaining capacity of the medium 4 is sufficient for storing the data of digital contents (YES at step 102), the data is downloaded via the medium access device to the medium 4 (step 103). If the remaining capacity of the medium 4 is insufficient for storing the data of digital contents (NO at step 102), a message inquiring whether a new medium 4 is added is displayed on the I/O device 22 and a response to this is received (step 104). If a new medium 4 is added (YES at step 105), the processes are again repeated from step 101. If a new medium 4 is not added (NO at step 105) , title information stored in the medium 4 is displayed on the I/O device 22, a message inquiring whether any digital contents can be deleted is also displayed to receive a response to this (step 106). If the data is to be deleted (YES at step 107), this data is deleted and the remaining capacity of the data is updated by adding the amount of the deleted data (step 108) to thereafter advance to step 101. If the data is not deleted (NO at step 107), the process is terminated.

### (2) The Second Embodiment

In the first embodiment, a user designates only one store for reservation. In the second embodiment, a user can designate a plurality of stores for reservation. A user can receive the reserved digital contents at a most convenient store among designated stores near at the home, near at the office and the like. In the following, only different points from the first embodiment will be described.

The constitution of the second embodiment is as follows. A reservation information storage is added to the storage 20 of the central controller 2 shown in Fig. 1. The records of the reservation information storage store data items including a reservation number, a contents ID and a stored ID. The meaning of each data term is same as the first embodiment.

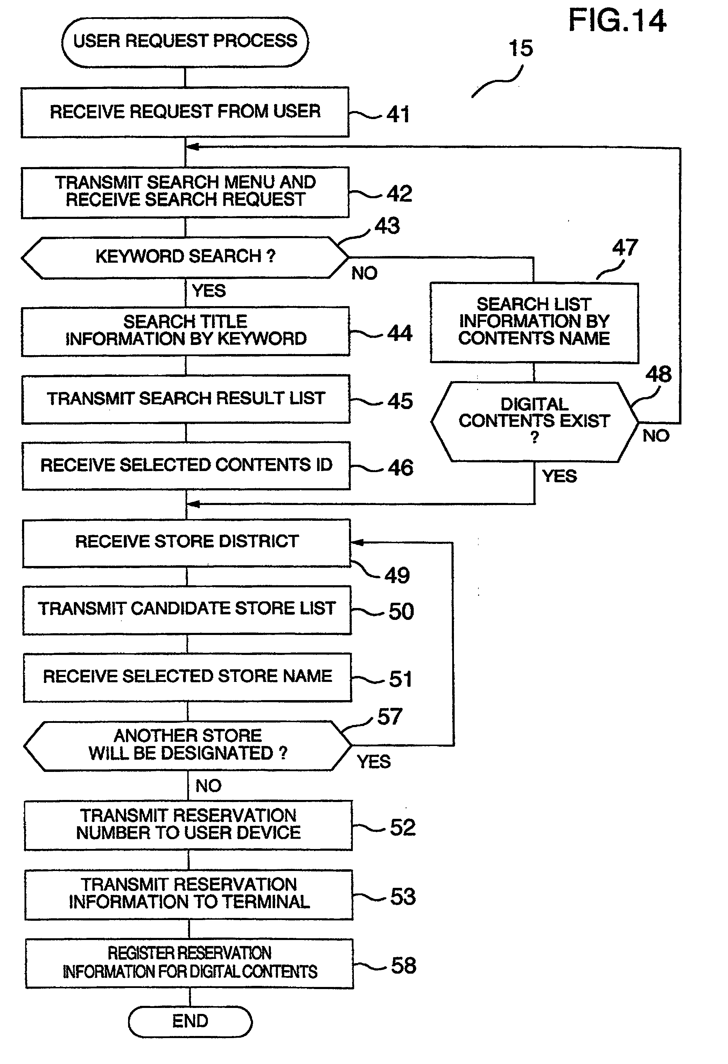

Fig. 14 is a flow chart illustrating the operation to be executed by a user request processor 15 of the second embodiment. The process from step 41 to 51 are same as those of the first embodiment shown in Fig. 10. After the store name is selected by the user device 1, the user request processor 15 inquires whether another store is to be designated (step 57). If another store is to be designated (YES at step 57), the flow returns to step 49 to repeat steps 49 to 51. If another store is not to be designated (NO at step 57), the reservation number of the user is issued and transmitted to the user device 1 (step 52). The same reservation number and the contents ID of reserved digital contents are transmitted as the reservation information to terminals 3 at all the selected stores (step 53). Lastly, the records including the reservation number, contents ID and store ID for all the selected stores are registered in the reservation information storage (step 58). The reservation ID and contents ID in the records coincide.

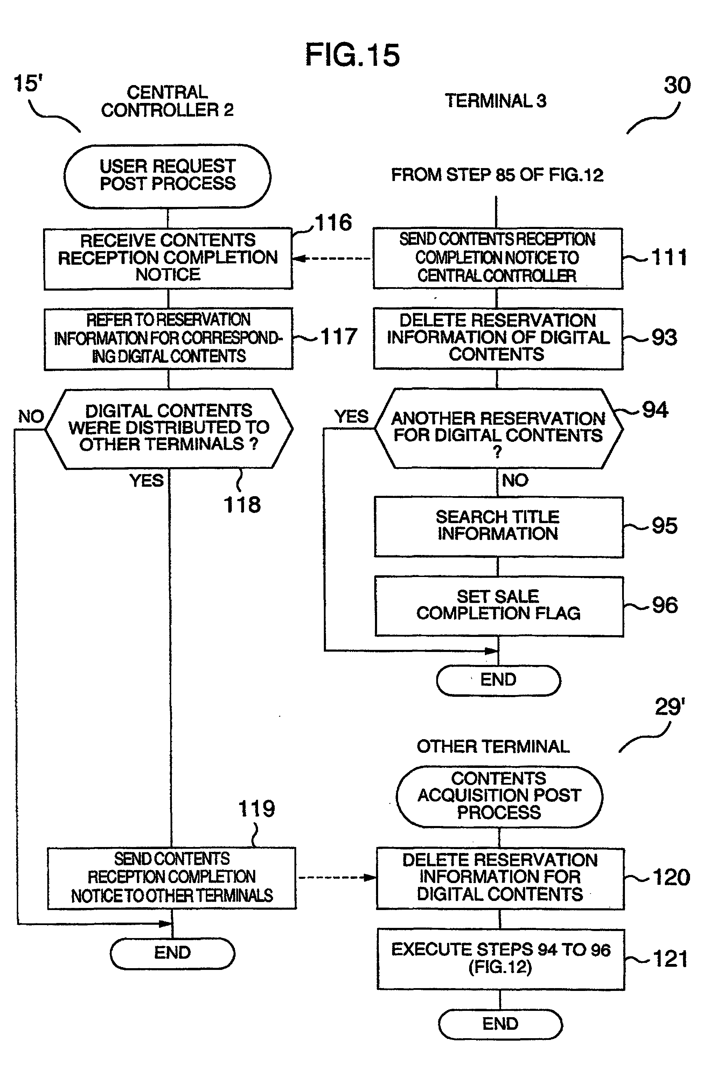

Fig. 15 is a flow chart illustrating the operation to be executed by a post processor 15' of the user request processor 15 of the central controller 2, a post processor 29' of the contents acquisition unit 29 and the medium access processor 30 of the terminal 3, according to the second embodiment.

The medium access processor 30 of the terminal 3 downloads the corresponding digital contents to the medium 4 at steps 81 to 85 of the first embodiment shown in Fig. 12, and thereafter transmits a contents reception completion notice of reserved digital contents including the reservation number to the central controller 2 (step 111). Thereafter, similar to the first embodiment, the reservation information deletion (step 93) and the sale completion flag setting (steps 94 to 96) are executed.

The post processor 15' of the user request processor 15 of the central controller 2 receives the contents reception completion notice (step 116), and refers to the reservation information storage to derive the record having the same reservation number and contents ID (step 117). If the digital contents were distributed to the terminals 3 of other stores (YES at step 118), the contents reception completion notice is transmitted to the terminals 3 of other stores (step 119). The post processor 15' of the user request processor 15 transmits the reservation number and contents ID to the terminals 3 corresponding to the other store IDs.

The post processor 29' of the contents acquisition unit 29 of the other terminal 3 receives the contents reception completion notice, searches the reservation information storage 26, and deletes the reservation information record having the corresponding reservation number (step 120). Then, steps 94 to 96 are executed (step 121).

### (3) The Third Embodiment

In the first and second embodiments, the central controller receives a reservation. The reservation may be received by the terminal 3 at each store. In the third embodiment, the terminal 3 at each store receives a reservation from a user and the central controller 2 is requested to transmit digital contents. In the following, only the different points from the first embodiment will be described.

The constitution of the third embodiment is as follows. Referring to Fig. 1, the user device 1 is connected via the network 5 to the terminal 3, and a communications controller 17 is provided in the terminal 3. A user request processor 15 is also provided in the main storage 32 of the terminal 3. The store information storage 13 in the storage 20 of the central controller 2 is not necessary.

The operation to be executed by the user request processor 15 of the third embodiment will be described with reference to Fig. 10. Upon reception of a request from the user device 1 (step 41), the user request processor 15 of the terminal 3 transmits a search menu to the user device 1, and in response to this, receives a search request from the user device 1 (step 42). If the search request is the keyword search (YES at step 43), the temporary and regular contents title storages 24 and 25 are searched by using the designated keyword. If the keyword is found in neither the storage 24 nor 25, a search request is transmitted to the central controller 2 which in turn searches the all contents title storage 12 (step 44), transmits a list of obtained search results to the user device 1 (step 45), and receives the selected contents ID (step 46). If the search request is designated by the contents name (NO at step 43), the user request processor 15 searches the temporary and regular contents title storages 24 and 25 by using the designated contents name. If the designated contents name is not found, a search request is transmitted to the central controller 2 which in turn searches the all contents title storage 12 (step 47). The steps 49 to 51 are not executed. At step 52, if the terminal 3 has the digital contents desired by the user, a message to this effect is transmitted to the user device, whereas if the central controller 2 has the digital contents desired by the user, a reservation number for the user is issued and transmitted to the user device 1. The step 53 is not executed, but the reservation information registration step 62 (Fig. 11) is executed.

In the third embodiment, the steps 66 to 68 shown in Fig. 11 are executed without any change by the contents request processor 16 of the central controller 2. The steps 61 and 63 are not executed by the contents acquisition unit 29 of the terminal. The contents acquisition unit 29 executes the steps 64 and 65 and the steps 69 to 76.

The steps 81 to 92 (Fig. 12) and the steps 101 to 108 (Fig. 13) are executed without any change by the medium access processor 30.

### (4) Other Modifications

In the above embodiments, the terminal 3 has a pair of the medium 4 and medium access device 23. Instead, the terminal 3 may have a plurality pair of media and medium access devices of the same type or different types. By using medium access devices of different types, various storage such as MD, DVD and memory cards can be used. In this case, a user designates the medium access device by using the I/O device 22 of the terminal 3. A user may also designate from the I/O device 22 whether compression of digital contents is executed and which compression method is used when the data is written in a medium. In accordance with such user designation, the medium access processor 30 compresses data and downloads it to the medium.

A correspondence table between the contents ID and the number of write times to media may be provided in each terminal 3. The medium access processor 30 increments the number of write times each time digital contents are downloaded to a medium. This information can be used for management of copyright fees.

In the above-described embodiments, a user first makes a reservation, and then goes to a store and records the digital contents in a medium of the user. When a user makes a reservation, the system may store a user contact location and a user contact method (telephone number, e-mail address) together with the reservation number. When the digital contents become available at the store, the system may contact the user. The medium may be prepared not by the user but by the store, and when the digital contents are downloaded, the system contacts the user.

The digital distribution system may share hardware and some software with a server/client system used for other purposes.

## Claims

1. A digital contents distribution system comprising:
a central controller (2);
a user device (1); and
a terminal (3) connected to the central controller via a network (6),
**characterised in that** said central controller (2) comprises:
means (15) for issuing a reservation identifier in response to a digital contents reservation and a designation of a reception store, both given by a user using the user device (1); and
means (15, 16) for transmitting the reservation identifier and the reserved digital contents to the terminal at the designated store,
and **in that** said terminal (3) comprises:
means (29) for receiving the reservation identifier and the digital contents transmitted from said central controller (2); and
means (30) for writing the digital contents corresponding to the reservation identifier in a medium (4).

2. The system of claim 1, wherein the user device (1) is adapted to receive the digital contents reservation and the designation of the reception store input by the user and to transmit the input information to said central controller (2).

3. The system of claim 1, wherein
said transmitting means of said central controller (2) is adapted to transmit the reservation identifier and an identifier of the reserved digital contents to the terminal at the designated store, and to transmit the digital contents in response to a transmission request by the terminal (3), and
said terminal (3) further comprises:
means (28) for storing the received digital contents together with the digital contents identifier;
means for judging using the digital contents identifier whether the reserved digital contents are already stored in said storing means; and
means for requesting said central controller (2) to transmit the reserved digital contents only when the reserved digital contents are not stored in said storing means.

4. The system of claim 1, wherein in response to a designation by the user of a plurality of reception stores, said transmitting means of said central controller (2) is adapted to transmit the reservation identifier and the reserved digital contents to the terminals at all the designated reception stores.

5. A digital contents distribution system comprising:
a central controller (2); and
a terminal (3) connected to the central controller via a network (6),
**characterised in that** said terminal (3) comprises:
means for issuing a reservation identifier in response to a digital contents reservation by a user using a user device (1);
means for requesting said central controller (2) to transmit the reserved digital contents;
means for receiving the digital contents transmitted from said central controller (2); and
means for writing the digital contents corresponding to the reservation identifier in a medium (4),
and **in that** said central controller (2) comprises means responsive to a transmission request from said terminal (3) for transmitting the digital contents to said transmission requesting terminal.

6. A digital contents distribution method for a server/client system, the method comprising the steps of:
issuing a reservation identifier in response to a digital contents reservation and a designation of a reception store, both given by a user using a user device (1), at a server (2);
transmitting the reservation identifier and the reserved digital contents to a client at the designated store, at the server;
receiving the reservation identifier and the digital contents transmitted from the server (2) via a network (6), at the client; and
writing the digital contents corresponding to the reservation identifier in a medium (4), at the client.

7. A digital contents distribution method for a server/client system, the method comprising the steps of:
issuing a reservation identifier in response to a digital contents reservation by a user using a user device (1), at a client;
requesting a server (2) to transmit the reserved digital contents, at the client;
responding to a transmission request from the client and transmitting the digital contents to the client via a network (6), at the server;
receiving the digital contents transmitted from the server, at the client; and
writing the digital contents corresponding to the reservation identifier in a medium (4), at the client.

8. A program running at a central controller (2) in a digital contents distribution system having the central controller (2) and a terminal (3) connected to the central controller via a network (6), the program including codes for executing the steps of:
issuing a reservation identifier in response to a digital contents reservation and a designation of a reception store, both given by a user using a user device (1);
transmitting the reservation identifier and an identifier of the reserved digital contents to the terminal (3) at the designated store; and
transmitting the digital contents to the terminal (3) when a transmission request is sent from the terminal.

9. A program running at a terminal (3) in a digital contents distribution system having a central controller (2) and the terminal (3) connected to the central controller via a network (6), the program including codes for executing the steps of:
receiving a reservation identifier and a digital contents identifier transmitted from the central controller (2);
judging using the digital contents identifier whether reserved digital contents are already stored in an own storage;
only if the reserved digital contents are not stored in the storage, requesting the central controller (2) to transmit the reserved digital contents;
storing the digital contents transmitted from the central controller (2) and the digital contents identifier in the storage; and
writing the digital contents corresponding to the reservation identifier in a medium.

10. The program of claim 9, further comprising a code for executing the steps of:
when the digital contents are to be stored, comparing the remaining capacity of the storage with the size of the digital contents to be stored; and
if the remaining capacity is smaller than the size, deleting oldest digital contents in the storage time until the remaining capacity becomes larger than or equal to the size of the digital contents.

## Patentansprüche

1. System zum Verteilen digitaler Inhalte mit:
einer zentralen Steuereinheit (2);
einer Benutzervorrichtung (1); und
einem mit der zentralen Steuereinheit über ein Netzwerk (6) verbundenen Terminal (3),
**dadurch gekennzeichnet, daß** die zentrale Steuereinheit (2) aufweist:
eine Einrichtung (15) zum Erteilen einer Reservierungskennung in Reaktion auf eine Reservierung für digitale Inhalte und eine Benennung eines Empfangsspeichers, die beide von einem Benutzer unter Verwendung der Benutzervorrichtung (1) vorgegeben sind; und
eine Einrichtung (15, 16) zum Übertragen der Reservierungskennung und der reservierten digitalen Inhalte an den benannten Speicher des Terminals,
und dadurch, daß das Terminal (3) aufweist:
eine Einrichtung (29) zum Empfangen der Reservierungskennung und der digitalen Inhalte, die von der zentralen Steuereinheit (2) übertragen wurden; und
eine Einrichtung (30) zum Schreiben der digitalen Inhalte entsprechend der Reservierungskennung in ein Medium (4).

2. System nach Anspruch 1, wobei die Benutzervorrichtung (1) zum Empfangen der Reservierung für digitale Inhalte und der Benennung des Empfangsspeichers, die von dem Benutzer eingegeben wurden, und zum Übertragen der Eingabeinformation an die zentrale Steuereinheit (2) ausgelegt ist.

3. System nach Anspruch 1, wobei
die Übertragungseinrichtung der zentralen Steuereinheit (2) zum Übertragen der Reservierungskennung und einer Kennung der reservierten digitalen Inhalte an den benannten Speicher des Terminals und zum Übertragen der digitalen Inhalte in Reaktion auf eine Übertragungsaufforderung durch das Terminal (3) ausgelegt ist, und
das Terminal (3) ferner aufweist:
eine Einrichtung (28) zum Speichern der empfangenen digitalen Inhalte zusammen mit deren Kennung;
eine Einrichtung, um mittels der Kennung der digitalen Inhalte zu beurteilen, ob die reservierten digitalen Inhalte bereits in der Speichereinrichtung gespeichert sind; und
eine Einrichtung, um die zentrale Steuereinheit (2) aufzufordern, die reservierten digitalen Inhalte nur dann zu übertragen, wenn die reservierten digitalen Inhalte nicht in der Speichereinrichtung gespeichert sind.

4. System nach Anspruch 1, wobei in Reaktion auf die Benennung mehrerer Empfangsspeicher durch den Benutzer die Übertragungseinrichtung der zentralen Steuereinheit (2) zum Übertragen der Reservierungskennung und der reservierten digitalen Inhalte an alle benannten Empfangsspeicher der Terminals ausgelegt ist.

5. System zum Verteilen digitaler Inhalte mit:
einer zentralen Steuereinheit (2); und
einem mit der zentralen Steuereinheit über ein Netzwerk (6) verbundenen Terminal (3),
**dadurch gekennzeichnet, daß** das Terminal (3) aufweist:
eine Einrichtung zum Erteilen einer Reservierungskennung in Reaktion auf eine durch einen Benutzer unter Verwendung einer Benutzervorrichtung (1) vorgegebenen Reservierung für digitale Inhalte;
eine Einrichtung, um die zentrale Steuereinheit (2) aufzufordern, die reservierten digitalen Inhalte zu übertragen;
eine Einrichtung zum Empfangen der von der zentralen Steuereinheit (2) übertragenen digitalen Inhalte; und
eine Einrichtung zum Schreiben der digitalen Inhalte entsprechend der Reservierungskennung in ein Medium (4),
und dadurch, daß die zentrale Steuereinheit (2) eine auf eine Übertragungsaufforderung von dem Terminal (3) ansprechende Einrichtung zum Übertragen der digitalen Inhalte zu dem die Übertragung fordernden Terminal aufweist.

6. Verfahren zum Verteilen digitaler Inhalte in einem Dienstleister/Kunde-System, wobei:
bei einem Dienstleister (2) in Reaktion auf eine Reservierung für digitale Inhalte und eine Benennung eines Empfangsspeichers, die beide von einem Benutzer durch Verwendung einer Benutzervorrichtung (1) vorgegeben werden, eine Reservierungskennung erteilt wird;
bei dem Dienstleister die Reservierungskennung und die reservierten digitalen Inhalte an den benannten Speicher eines Kunden übertragen werden;
bei dem Kunden die Reservierungskennung und die digitalen Inhalte, die von dem Dienstleister über ein Netzwerk (6) übertragen wurden, empfangen werden; und
bei dem Kunden die digitalen Inhalte entsprechend der Reservierungskennung in ein Medium (4) geschrieben werden.

7. Verfahren zum Verteilen digitaler Inhalte in einem Dienstleister/Kunde-System, wobei:
bei einem Kunden in Reaktion auf eine durch einen Benutzer unter Verwendung einer Benutzervorrichtung (1) vorgegebenen Reservierung für digitale Inhalte eine Reservierungskennung erteilt wird;
bei dem Kunden ein Dienstleister (2) aufgefordert wird, die reservierten digitalen Inhalte zu übertragen;
bei dem Dienstleister eine Übertragungsaufforderung von dem Kunden beantwortet wird und die digitalen Inhalte über ein Netzwerk (6) zu dem Kunden übertragen werden;
bei dem Kunden die von dem Dienstleister übertragenen digitalen Inhalte empfangen werden; und
bei dem Kunden die digitalen Inhalte entsprechend der Reservierungskennung in ein Medium (4) geschrieben werden.

8. Programm, das in einer zentralen Steuereinheit (2) läuft, die in einem System zum Verteilen digitaler Inhalte mit der zentralen Steuereinheit (2) und einem mit der zentralen Steuereinheit über ein Netzwerk (6) verbundenen Terminal (3) angeordnet ist, wobei durch Ausführen des Programmcodes:
in Reaktion auf eine Reservierung für digitale Inhalte und eine Benennung eines Empfangsspeichers, die beide von einem Benutzer durch Verwendung einer Benutzervorrichtung (1) vorgegeben werden, eine Reservierungskennung erteilt wird;
die Reservierungskennung und eine Kennung der reservierten digitalen Inhalte an den benannten Speicher des Terminals (3) übertragen werden; und
die digitalen Inhalte an das Terminal (3) übertragen werden, wenn eine Übertragungsaufforderung von dem Terminal ausgesendet wird.

9. Programm, das in einem Terminal (3) läuft, das in einem System zum Verteilen digitaler Inhalte mit einer zentralen Steuereinheit (2) und dem mit der zentralen Steuereinheit über ein Netzwerk (6) verbundenen Terminal (3) angeordnet ist, wobei durch Ausführen der Programmcodes:
eine Reservierungskennung und eine Kennung für digitale Inhalte, die von der zentralen Steuereinheit (2) übertragen wurden, empfangen werden;
unter Verwendung der Kennung für digitale Inhalte beurteilt wird, ob die reservierten digitalen Inhalte bereits in einem eigenen Speicher gespeichert wurden;
nur falls die reservierten digitalen Inhalte nicht in dem Speicher gespeichert sind, die zentrale Steuereinheit (2) zum Übertragen der reservierten digitalen Inhalte aufgefordert wird;
die von der zentralen Steuereinheit (2) übertragenen digitalen Inhalte und die Kennung für digitale Inhalte in dem Speicher gespeichert werden; und
die digitalen Inhalte entsprechend der Reservierungskennung in ein Medium geschrieben werden.

10. Programm nach Anspruch 9, wobei durch Ausführen des Codes ferner:
wenn die digitalen Inhalte gespeichert werden sollen, die verbleibende Speicherkapazität mit der Größe der zu speichernden digitalen Inhalte verglichen wird; und
falls die verbleibende Kapazität kleiner als die Größe ist, die ältesten digitalen Inhalte innerhalb der Speicherzeit gelöscht werden, bis die verbleibende Kapazität mindestens so groß ist wie die Größe der digitalen Inhalte.

## Revendications

1. Système de distribution de contenus numériques comportant :
un contrôleur central (2), un dispositif utilisateur (1), et
un terminal (3) relié au contrôleur central via un réseau (6),
**caractérisé en ce que** ledit contrôleur central (2) comporte :
des moyens (15) pour émettre un identifiant de réservation en réponse à une réservation d'un contenu numérique et à une désignation d'un magasin de réception, l'une et l'autre étant données par un utilisateur utilisant le dispositif utilisateur (1), et
des moyens (15, 16) pour transmettre l'identifiant de réservation et le contenu numérique réservé au terminal dans le magasin désigné,
et **en ce que** ledit terminal (3) comporte :
des moyens (29) pour recevoir l'identifiant de réservation et le contenu numérique transmis par ledit contrôleur central (2), et
des moyens (30) pour écrire le contenu numérique correspondant à l'identifiant de réservation sur un support (4).

2. Système selon la revendication 1, dans lequel le dispositif utilisateur (1) est adapté pour recevoir la réservation du contenu numérique et la désignation du magasin de réception entrées par l'utilisateur et pour transmettre les informations entrées audit contrôleur central (2).

3. Système selon la revendication 1, dans lequel
lesdits moyens de transmission dudit contrôleur central (2) sont adaptés pour transmettre l'identifiant de réservation et un identifiant du contenu numérique réservé au terminal dans le magasin désigné, et pour transmettre le contenu numérique en réponse à une demande de transmission par le terminal (3), et
ledit terminal (3) comporte en outre :
des moyens (28) pour mémoriser le contenu numérique reçu conjointement avec l'identifiant du contenu numérique,
des moyens pour déterminer en utilisant l'identifiant du contenu numérique si le contenu numérique réservé est déjà mémorisé dans lesdits moyens de mémorisation, et
des moyens pour demander audit contrôleur central (2) de transmettre le contenu numérique réservé uniquement lorsque le contenu numérique réservé n'est pas mémorisé dans lesdits moyens de mémorisation.

4. Système selon la revendication 1, dans lequel en réponse à une désignation par l'utilisateur d'une pluralité de magasins de réception, lesdits moyens de transmission dudit contrôleur central (2) sont adaptés pour transmettre l'identifiant de réservation et le contenu numérique réservé aux terminaux dans tous les magasins de réception désignés.

5. Système de distribution de contenus numériques comportant :
un contrôleur central (2), et
un terminal (3) relié au contrôleur central via un réseau (6),
**caractérisé en ce que** ledit terminal (3) comporte :
des moyens pour émettre un identifiant de réservation en réponse à une réservation d'un contenu numérique par un utilisateur utilisant un dispositif utilisateur (1),
des moyens pour demander audit contrôleur central (2) de transmettre le contenu numérique réservé,
des moyens pour recevoir le contenu numérique transmis par ledit contrôleur central (2), et
des moyens pour écrire le contenu numérique correspondant à l'identifiant de réservation sur un support (4),
et **en ce que** ledit contrôleur central (2) comporte des moyens sensibles à une demande de transmission provenant dudit terminal (3) pour transmettre le contenu numérique audit terminal demandant la transmission.

6. Procédé de distribution de contenus numériques pour un système client/serveur, le procédé comportant les étapes consistant à :
émettre un identifiant de réservation en réponse à une réservation d'un contenu numérique et à une désignation d'un magasin de réception, l'une et l'autre étant données par un utilisateur utilisant un dispositif utilisateur (1), du côté d'un serveur (2),
transmettre l'identifiant de réservation et le contenu numérique réservé à un client dans le magasin désigné, du côté du serveur,
recevoir l'identifiant de réservation et le contenu numérique transmis par le serveur (2) via un réseau (6), du côté du client, et
écrire le contenu numérique correspondant à l'identifiant de réservation sur un support (4), du côté du client.

7. Procédé de distribution de contenu numérique pour un système serveur/client, le procédé comportant les étapes consistant à :
émettre un identifiant de réservation en réponse à une réservation d'un contenu numérique par un utilisateur utilisant un dispositif utilisateur (1), du côté d'un client,
demander à un serveur (2) de transmettre le contenu numérique réservé, du côté du client,
répondre à une demande de transmission provenant du client et transmettre le contenu numérique au client via un réseau (6), du côté du serveur, et
recevoir le contenu numérique transmis par le serveur, du côté du client, et
écrire le contenu numérique correspondant à l'identifiant de réservation sur un support (4), du côté du client.

8. Programme s'exécutant dans un contrôleur central (2) d'un système de distribution de contenus numériques ayant le contrôleur central (2) et un terminal (3) relié au contrôleur central via un réseau (6), le programme incluant des codes pour exécuter les étapes consistant à :
émettre un identifiant de réservation en réponse à une réservation d'un contenu numérique et à une désignation d'un magasin de réception, l'une et l'autre étant données par un utilisateur utilisant un dispositif utilisateur (1),
transmettre l'identifiant de réservation et un identifiant du contenu numérique réservé au terminal (3) dans le magasin désigné, et
transmettre le contenu numérique au terminal (3) lorsqu'une demande de transmission est envoyée par le terminal.

9. Programme s'exécutant dans un terminal (3) d'un système de distribution de contenus numériques ayant un contrôleur central (2) et le terminal (3) relié au contrôleur central via un réseau (6), le programme incluant des codes pour exécuter les étapes consistant à :
recevoir un identifiant de réservation et un identifiant d'un contenu numérique transmis par le contrôleur central (2),
déterminer en utilisant l'identifiant du contenu numérique si le contenu numérique réservé est déjà mémorisé dans un propre support de mémorisation,
uniquement si le contenu numérique réservé n'est pas mémorisé dans le support de mémorisation, demander au contrôleur central (2) de transmettre le contenu numérique réservé,
mémoriser le contenu numérique transmis par le contrôleur central (2) et l'identifiant du contenu numérique dans le support de mémorisation, et
écrire le contenu numérique correspondant à l'identifiant de réservation sur un support.

10. Programme selon la revendication 9, comportant en outre un code pour exécuter les étapes consistant à :
lorsque le contenu numérique doit être mémorisé, comparer la capacité restante sur le support de mémorisation à la taille du contenu numérique à mémoriser, et
si la capacité restante est inférieure à la taille, supprimer le contenu numérique le plus ancien dans le temps de mémorisation jusqu'à ce que la capacité restante devienne supérieure ou égale à la taille du contenu numérique.
